# EUROPÄISCHE PATENTSCHRIFT

(11) **EP 3 090 617 B1**
(45) Veröffentlichungstag und Bekanntmachung des Hinweises auf die Patenterteilung: **11.03.2020**
(21) Anmeldenummer: 15166640.1
(22) Anmeldetag: 06.05.2015
(51) Int. Cl.: A01D 43/063, A01D 45/00, A01D 45/06

(54) **FAHRBARE ERNTEMASCHINE UND VERFAHREN ZUM ERNTEN VON PFLANZENTEILEN**
AGRICULTURAL HARVESTER AND METHOD FOR HARVESTING PLANT PARTS
MACHINE DE RÉCOLTE ET PROCÉDÉ DE RÉCOLTE DE PARTIES DE PLANTES

(43) Veröffentlichungstag der Anmeldung: 09.11.2016
(73) Patentinhaber: HempConsult GmbH, 40470 Düsseldorf (DE)
(72) Erfinder: Dulon, Rafael, 17207 Bollewick OT Wildkuhl (DE)
(74) Vertreter: Schulz Junghans Patentanwälte PartGmbB

(56) Entgegenhaltungen:
- DE-U1- 29 712 905
- FR-A1- 2 885 009
- US-B1- 8 393 137
- Tonnie Stam: "DUN AGRO maait hennep voor H.S.Agri .Claas Xerion 4000", , 13. August 2014 (2014-08-13), XP054976055, Gefunden im Internet: URL:https://www.youtube.com/watch?v=Gs1e-z 1xuVc [gefunden am 2015-09-09]

## Beschreibung

Die vorliegende Erfindung betrifft ein Verfahren zum Ernten von Pflanzenteilen, insbesondere zum Ernten von Hanf.

Fahrbare Landmaschinen sind in unterschiedlichsten konstruktiven Ausführungsformen bekannt, wobei die jeweiligen spezifischen konstruktiven Merkmale dem jeweiligen landwirtschaftlichen Zweck, insbesondere den zu be- oder verarbeitenden Pflanzenformen, angepasst sind.

Zur Erhöhung der Flexibilität einiger fahrbarer landwirtschaftlicher Geräte sind diese höhenverstellbar ausgeführt, um unterschiedlich hohe Pflanzensorten be- oder verarbeiten zu können, ohne dabei die Pflanzen zu beschädigen. Des Weiteren existieren fahrbare landwirtschaftliche Geräte, bei denen eine Spurbreitenänderung durchgeführt werden kann, um die Spurbreite des Fahrzeuges den Gegebenheiten auf den Feldern anzupassen und demzufolge ebenfalls weniger Pflanzengut zu zerstören.

Weiterhin sind fahrbare landwirtschaftliche Geräte bekannt, die über hydraulische Antriebe verfügen. Derartige hydraulische Antriebe ermöglichen die Leistungsansteuerung jedes einzelnen Rades, sodass sich dadurch ein Allrad-Fahrbetrieb mit einer sensiblen Allradlenkung realisieren lässt.

Die genannten Merkmale sind oftmals an sogenannten Spritzenfahrzeugen in der Landwirtschaft ausgeführt, die eine oder mehrere an ein Fahrgestell montierte Spritzen zur Ausbringung eines Wirkstoffes aufweisen. Die Spritzen-Einrichtung ist dabei üblicherweise vor einer Fahrerkabine am Fahrzeug angeordnet und erstreckt sich im Wesentlichen quer zur Fahrtrichtung. Aufgrund dessen, das die dadurch gegebene Fahrzeugbreite für einen Betrieb auf öffentlichen Straßen zu breit ist, ist an diesen Fahrzeugen vorgesehen, das Spritzgestänge zum Transport einzuklappen und somit die Spritzen-Einrichtungen im Wesentlichen längs bzw. parallel zur Fahrtrichtung anzuordnen.

Weiterhin sind fahrbare landwirtschaftliche Geräte bekannt, die unter Durchführung einer Schnittoperation Pflanzenteile von in der Erde verbleibenden Pflanzen abtrennen, aufnehmen und einem Begleitfahrzeug zur temporären Aufnahme zuführen.

So sind bereits fahrbare Erntemaschinen zum Ernten von Pflanzenteilen bekannt, die sich insbesondere zum Ernten von Hanf eignen. Derartige Erntemaschinen umfassen ein Fahrzeug sowie eine daran angeordnete Schneideinrichtung zum Abtrennen von Teilen von in der Erde verbleibenden Pflanzen, sowie mehrere Transporteinrichtungen zum Transport abgetrennter Pflanzenteile quer sowie längs zur Fahrtrichtung des Fahrzeugs, so dass abgetrennte Pflanzenteile einem Behälter des Fahrzeugs zuführbar sind. Es ist zudem bekannt, die Schneideinrichtung in ihrer Höhenposition verstellbar auszugestalten, sodass in unterschiedlichen Höhen Schnittvorgänge durchgeführt werden können.

Derartige Geräte sind jedoch hinsichtlich der Verstellmöglichkeiten in ihren Fahrwerken relativ unflexibel und weisen üblicherweise durch eine im Wesentlichen im zentralen Bereich des Fahrzeuges vorhandene Transporteinrichtung zur Weiterleitung der abgetrennten Pflanzenteilen ein relativ großes, nicht flexible gestaltbares Volumen auf, welches insbesondere zum bearbeiten unterschiedlicher Pflanzen oder auch Pflanzen unterschiedlicher Höhe nicht optimal geeignet ist.

XP054976055 (Tonnie Stam: "DUN AGRO maait hennep voor H.S.Agri .Claas Xerion 4000", YouTube [online][Video], abgerufen am 09.09.2015 von: https://www.youtube.com/watch?v=Gs1e-z1xuVc) offenbart ein Verfahren nach dem Oberbegriff von Anspruch 1.

Die Erfindung liegt die Aufgabe zugrunde, ein Verfahren zum Ernten von Pflanzenteilen zur Verfügung zu stellen, mit der in flexibler, kostengünstiger sowie einfach bedienbarer Weise Erntevorgänge an Pflanzen unterschiedlicher Art und/oder unterschiedlicher Höhe ausgeführt werden können.

Diese Aufgabe wird durch das erfindungsgemäße Verfahren zum Ernten von Pflanzenteilen gemäß Anspruch 1gelöst.

Die für das erfindungsgemäße Verfahren nutzbare fahrbare Erntemaschine zum Ernten von Pflanzenteilen ist insbesondere zum Ernten von Hanf ausgestaltet. Sie umfasst ein Fahrzeug sowie eine daran angeordnete Schneideinrichtung zum Abtrennen von Teilen von in der Erde verbleibenden Pflanzen, eine erste Transporteinrichtung zum Transport abgetrennter Pflanzenteile im Wesentlichen quer zur Fahrtrichtung des Fahrzeuges und eine zweite Transproteinrichtung zum Transport abgetrennter Pflanzenteile im Wesentlichen längs zur Fahrtrichtung des Fahrzeuges. Des Weiteren umfasst die fahrbare Erntemaschine einen Behälter zur Aufnahme der abgetrennten Pflanzenteile, dem die Pflanzenteile mittels der zweiten Transporteinrichtung zuführbar sind. Die fahrbare Erntemaschine ist vorzugsweise ein Automobil. Dessen Fahrtrichtung ist auf seine Bewegungsrichtung bei Geradeausfahrt definiert. Im zum Ernteprozess eingerichteten Zustand sind die erste Transporteinrichtung und die zweite Transporteinrichtung derart zueinander positioniert, das von der ersten Transporteinrichtung transportierte Pflanzenteile an die zweite Transporteinrichtung übergebbar sind, nämlich entweder mittelbar oder unmittelbar übergebbar sind. Die zweite Transporteinrichtung ist zum Abtransport von mit der ersten Transproteinrichtung transportierter Pflanzenteile in die Aufnahmeeinrichtung eingerichtet. In günstiger Ausgestaltung der fahrbaren Erntemaschine existiert weiterhin eine dritte Transporteinrichtung zur Übergabe von mit der ersten Transporteinrichtung transportierter Pflanzenteile auf die zweite Transporteinrichtung, sodass hier demzufolge eine mittelbare Übergabe zwischen der ersten Transporteinrichtung und der zweiten Transporteinrichtung vollzogen wird, nämlich mittels der dritten Transporteinrichtung. Die genannten Transporteinrichtungen weisen vorzugsweise jeweils einen hydraulischen Antrieb auf und sind in Ihrer jeweiligen Transportgeschwindigkeit variabel einstellbar. Das Fahrzeug der fahrbaren Erntemaschine weist vorzugsweise einen Verbrennungsmotor und/ oder einen elektromotorischen Antrieb auf. Das Fahrzeug hat vorzugsweise ein Vier- oder Sechs-Räder-Fahrwerk sowie einen Fahrerstand bzw. eine Kabine. Der Fahrerstand ist vorzugsweise derart angeordnet, dass davon ausgehend ein Boden eines vom Fahrgestell getragenen Behälters für eine Person in einfacher Weise zu erreichen ist. Zwecks Erhöhung der Flexibilität der Erntemaschine und/oder zur Verbesserung deren Fahrverhaltens oder auch Wendigkeit sind vorzugsweise alle Räder des Fahrzeuges angetrieben, insbesondere hydraulisch angetrieben.

Die Schneideinrichtung der Erntemaschine ist vorteilhafterweise in ihrer Höhenposition verstellbar, wobei gegeneinander die Höhe der Schneideinrichtung in Bezug zur Erde bzw. zum Fahrgrund zu messen ist. Zu diesem Zweck weist die Erntemaschine eine Parallelogramm-Höhenverstellungseinrichtung auf, welche zwischen Fahrgestell und Schneideinrichtung angeordnet ist und vorzugsweise als Gestänge ausgeführt die Schneideinrichtung in unterschiedlichen Höhen über den Erdboden positionieren kann. Vorzugsweise erfolgt eine derartige Höhenverstellung hydraulisch angetrieben. Ebenso sind rotierende Elemente der Schneideinrichtung vorzugsweise hydraulisch angetrieben. Dadurch lässt sich die Drehzahl dieser rotierenden Einrichtung variabel einstellen. Die Schneideinrichtung verfügt vorzugsweise weiterhin über einen Doppelmesser-Mähbalken zum Abschneiden von Pflanzenteilen. Dieser Doppelmesser-Mähbalken umfasst zwei Klingen, die translatorisch bewegt werden können. Auch zur Realisierung dieser Bewegungen ist vorzugsweise ein hydraulischer Antrieb vorzusehen, mit dem auch hier die Schnittgeschwindigkeiten variabel eingestellt werden können.

Die Schneideinrichtung ist vorteilhafterweise derart ausgestaltet, dass sie in ihrer Längsrichtung mehrere voneinander separierbare Segmente aufweist. Die Längsrichtung ist dabei die Richtung, die bei montierter Schneideinrichtung am Fahrgestell des Fahrzeuges quer zur Fahrtrichtung des Fahrzeuges verläuft. Damit verläuft diese Längsrichtung parallel zur Rotationsachse der Schneideinrichtung. Somit ist die Schneideinrichtung segmentweise in ihrer in Richtung der Fahrzeug-Breite verlaufenden Länge einstellbar durch Montage und Demontage einzelner Segmente zwecks Anpassung der Länge der Schneideinrichtung an die beabsichtigte Schnittbreite. Das heißt, dass die Schneideinrichtung in ihrer Länge und demzufolge die Schnittbreite der Erntemaschine bei Verwendung geeignet abgestufter Segmente nahezu beliebig skalierbar ist.

Die Schneideinrichtung weist sogenannte Paddel oder auch Zinken auf, die um eine jeweilige Lagerung selbst eine Rotation ausführen können. Die Paddel bzw. Zinken zumindest eines Segmentes sind miteinander vorzugsweise mechanisch verbunden. Insbesondere können die Paddel bzw. Zinken an eine Kurvensteuerung angeschlossen sein, die in Abhängigkeit der jeweiligen Position der Lagerung des Paddels bzw. Zinkens diesen in eine bestimmte Winkelposition bewegt. Das bedeutet, das neben der Rotationsbewegung der Lagerung des Paddels bzw. Zinkens aufgrund der Rotation der Schneideinrichtung um eine Zentralachse das jeweilige Paddel bzw. der jeweilige Zinken eine weitere Rotationsbewegung um seine eigene Lagerungsstelle herum ausführt, wobei diese zweite Rotationsbewegung von der Kurvensteuerung gesteuert wird, um in Zusammenwirken mit der Rotationsbewegung der Schneideinrichtung eine komplexe Bewegung durchzuführen, die in optimaler Weise die Zu- und/oder Abführung von Pflanzensegmenten zu bzw. vom Schneidprozess realisiert.

In vorteilhafter Ausgestaltung der fahrbaren Erntemaschine weist diese eine Kupplungseinrichtung auf, mit der die Schneideinrichtung am Fahrzeug lösbar mechanisch angeordnet werden kann. Dadurch ist die Schneideinrichtung im bestimmungsgemäßen Ernteeinsatz in einfacher Weise am Fahrzeug montierbar und vorzugsweise mittels der bereits genannten Parallelogramm-Höhenverstellungseinrichtung positionierbar. Aufgrund dessen, dass die Schneideinrichtung in Abhängigkeit von der Anzahl und Breite der verwendeten Segmente gegebenenfalls eine große Breite aufweisen kann, ermöglicht die Kupplungseinrichtung in einfacher Weise eine Demontage der Schneideinrichtung vom Fahrzeug, um sie z. B. in einen mitgeführten Behälter oder aber auch auf einen weiteren Transportfahrzeug ablegen zu können und derart transportieren zu können.

In weiterer günstiger Ausgestaltung der fahrbaren Erntemaschine ist vorgesehen, dass die zweite Transporteinrichtung mechanisch fest mit der Schneideinrichtung verbunden ist und zumindest der mit der Schneideinrichtung verbundene Bereich der zweiten Transporteirichtung zusammen mit der Schneideinrichtung in seiner Höhenposition verstellbar ist. Dadurch wird trotz Höhenverstellung der Schneideinrichtung gewährleistet, dass die von der Schneideirichtung abgetrennten Pflanzenteile an die zweite Transporteinrichtung unabhängig von der Höhe der Schneideinrichtung übergeben und abtransportiert werden können. Zu diesem Zweck ist vorzugweise auch die erste Transporteinrichtung fest mit der Schneideinrichtung verbunden, sodass auch die Höhenposition der ersten Transporteinrichtung in Abhängigkeit von der Höhenverstellung der Schneideinrichtung veränderbar ist.

Zwecks Anpassung des Fahrgestells des Fahrzeuges an die Höhe der zu bearbeitenden Pflanzen und/oder an Abstände von Fahrgassen im Pflanzenfeld ist vorgesehen, dass das Fahrzeug ein Fahrwerk aufweist, welches eine Höhenverstellung des Fahrzeuges zwecks Einstellung der lichten Höhe zwischen Erdboden und Unterseite des Fahrzeuges und/oder eine Spurbreitenverstellung ermöglicht. Durch die Spurbreitenverstellung lässt sich der Abstand der Räder eines auf einer Achse angeordneten Räderpaares verändern, sodass das Fahrzeug flexibel an bestimmte Fahrgassenbreiten anpassbar ist. Die Höhenverstellung des Fahrwerkes erfolgt vorzugsweise in einem Bereich von 400 mm - 800 mm, wobei zu diesem Zweck das Fahrzeug eine Justiereinrichtung zur Einstellung der lichten Höhe ohne Einbeziehung eines Federweges bei Einfederung des Fahrwerkes aufweist. Aufgrund dessen, das eine relativ hohe Fahrwerks- und demzufolge Fahrzeug-Höhe einstellbar ist, lässt sich auch eine Überladehöhe von 4,30 m realisieren.

Das Fahrzeug sollte des Weiteren eine hydraulische Antriebseinrichtung aufweisen zum Antrieb des Fahrwerkes, wobei diese hydraulische Antriebseinrichtung vorzugsweise als hydrostatischer Fahrantrieb ausgestaltet ist. Die hydraulische Antriebseinrichtung kann dabei einem jeweiligen Rad zugeordnete hydraulische Antriebe aufweisen, die über flexible Leitungen mit einem Druckmedium versorgt werden. Aufgrund der Verwendung derartiger flexibler Leitung ist die Höhen- bzw. Breiten-Verstellung des Fahrwerkes konstruktiv einfach ausführbar. Aufgrund dessen, das eine relativ hohe hydraulische Leistung vorgehalten werden muss zum Betrieb der Antriebe, können von der zentralen Antriebseinrichtung auch Antriebsmotoren von Transporteinrichtungen, der Schneideinrichtung sowie auch einer Einrichtung zur Höhenverstellung des Fahrwerkes gespeist werden.

In weiterer günstiger Ausgestaltung der fahrbaren Erntemaschine ist vorgesehen, dass das Fahrzeug mit einer Allradlenkung ausgestattet ist. Diese Allradlenkung ermöglicht es unter anderem, dass bei Kurvenfahrten die Hinterräder in der Spur der Vorderräder fahren können, um möglichst wenig Pflanzen zu beeinträchtigen. In besonders günstiger Ausgestaltung ist vorgesehen, dass mit der Allradlenkung auch eine sogenannte Hundeganglenkung bzw. Krabbenlenkung realisierbar ist. Die Hundeganglenkung ist z. B. dann vorteilhaft anzuwenden, um am Seitenhang bei Fahrt in Sichtlinie ein Abdriften des gegebenenfalls schwereren Hecks aus der Fahrspur zu vermeiden. Zusätzlich ist die Hundeganglenkung zum gezielten Ausschwenken des Hecks zwecks Durchführung eines Überladevorgangs auf Transportfahrzeuge nutzbar.

Der Behälter der fahrbaren Erntemaschine sollte derart ausgestaltet sein, dass er einen Rollenboden umfasst, welcher mehrere angetriebene oder antreibbare Rollen zur Verdichtung und/oder zum Transportieren von Pflanzenteilen im Behälter aufweist. Gegebenenfalls ist der Rollenboden durch eine Kombination von angetriebenen und nichtangetriebenen Rollen ausgestaltet. In einer alternativen Ausführungsform umfasst der Rollenboden lediglich angetriebene Rollen. Der Antrieb der angetriebenen Rollen erfolgt auch hier vorzugsweise hydraulisch.

In weiterer günstiger Ausgestaltung der Erntemaschine ist vorgesehen, dass das Fahrzeug ein Drehgelenk aufweist, mit welchem der Behälter mechanisch verbunden ist, sodass der Behälter um eine im Wesentlichen senkrecht verlaufene Drehachse des Drehgelenks schwenkbar ist. Vorzugsweise ist das Drehgelenk am Fahrgestell des Fahrzeuges angeordnet. Das Drehgelenk dient der optimalen Einstellung einer Winkelposition des Behälters in der Ebene des Behälterbodens zwecks Erleichterung der Be- und Entladung sowie der Einstellung einer Transportstellung des Behälters für den Fahrbetrieb auf öffentlichen Straßen zur Vermeidung einer Überbreite sowie der optimalen Positionierung des Schwerpunktes eines gegebenenfalls ungleichmäßig beladenen Fahrzeuges bzw. Behälters. Insbesondere bei geschwenktem Behälter erleichtert die sog. Hundeganglenkung den Be- und Entladevorgang durch die Möglichkeit des dichten Anfahrens an ein zu beladenes Objekt bei gleichzeitiger Schrägstellung des Fahrzeuges.

Vorteilhafterweise umfasst die Erntemaschine weiterhin ein Abstützelement, welches dem Behälter zugeordnet ist, sowie wenigstens eine Kippeinrichtung, mit welcher die Winkelposition des Behälters in Bezug zur Position des Behälters im Aufnahme- und/oder Transportzustand variierbar ist. Die Kippeinrichtung stützt sich dabei am oder auf dem Abstützelement ab, sodass in Bezug zu einer im Wesentlichen planparallelen Ausrichtung des Behälterbodens in Bezug zur Erdoberfläche, welche der Position des Behälters in Aufnahme- und/oder Transportzustand entspricht, eine Winkelposition des Behälters bzw. Behälterbodens einstellbar ist, die es ermöglicht, das schwerkraftbedingt im Behälter aufgenommene Pflanzenteile aus diesem herausrutschen oder herausfallen. Das Abstützelement ist vorzugsweise als Zwischenrahmen ausgestaltet zwischen dem Fahrgestell des Fahrzeuges und dem Boden des Behälters angeordnet und nimmt die von der vorzugsweise als Kippzylinder ausgestalteten Kippeinrichtung beim Kippen aufgebrachten Kräfte auf. Dieser Zwischenrahmen verläuft bevorzugt planparallel zum Boden des Behälters in dessen Aufnahme- und/oder Transportposition. Vorzugsweise ist mit der Kippeinrichtung die Winkelposition des Behälters stufenlos einstellbar, sodass sich auch hierfür wieder ein hydraulischer Antrieb anbietet.

Der Behälter umfasst vorzugsweise mehrere das Behältervolumen von der Umgebung abgrenzende Behälterwände auf, wobei wenigstens eine der Behälterwände oder ein Behälterwandsegment derart von seiner die Behälterwand bzw. ein Behälterwandsegment ausbildenden Position und Lage entfernbar ist, insbesondere umschwenkbar ist, das der Boden des Behälters in der Ebene des Bodens bei Entfernung der Behälterwand bzw. des Behälterwandsegments aus der die Behälterwand bzw. ein Behälterwandsegment ausbildenden Position und Lage im Wesentlichen über den dadurch freigegebenen Randabschnitt des Bodens frei zugängig ist. Diese Ausgestaltung des Behälters dient insbesondere der Einschwenkbarkeit der zweiten Transporteinrichtung in dem Behälterraum zwecks der Einstellung einer straßenverkehrstauglichen Position der zweiten Transporteinrichtung und Verringerung der Breite der gesamten Erntemaschine. Der Behälter selbst hat vorzugsweise derartige Abmessungen, das bei gedrehtem Behälter der Behälterboden bereichsweise vom Endabschnitt der zweiten Transporteinrichtung überdeckt ist, sodass beim Betrieb der zweiten Transporteinrichtung Pflanzenteile direkt von der zweiten Transporteinrichtung in den Behälter fallen können.

Zur Optimierung des Volumens an aufnehmbaren geernteten Pflanzenteilen ist vorgesehen, dass die Erntemaschine eine Einrichtung zu Verdichtung und/oder Transport von im Behälter aufgenommenen Pflanzenteilen aufweist. Dies kann z. B. eine über dem Behälterboden angeordnete Einrichtung sein, die ständig eine im wesentlichem senkrecht auf die aufgenommenen Pflanzenteile wirkende Kraft aufbringt, wie z. B. eine mit einer Federkraft beaufschlagte Druckeinrichtung, die insbesondere in Form eines um seine Lenkachse rotierbaren Zylinders ausgestaltet ist. Eine alternative Ausführungsform einer derartigen Druckeinrichtung besteht in einem relativ schweren Druck-Element, welches gegebenenfalls auch in Form eines rotierbaren Zylinders ausgestaltet ist, dessen Eigengewicht auf die im Behälter aufgenommenen Pflanzenteilen aufbringbar ist. Vorzugsweise ist ein solcher Zylinder bzw. solch ein Druck-Element ebenfalls antreibbar oder angetrieben, um zusätzlich zu den angetriebenen Rollen im Boden des Behälters eine weitere Einrichtung zum Transport der Pflanzenteile im Behälter und/ oder zu deren Verdichtung bereitzustellen.

Eine weitere alternative Ausführungsform der Einrichtung zur Verdichtung und/oder zum Transport von im Behälter aufgenommenen Pflanzenteilen stellt eine verfahrbare Behälterwand oder eine verfahrbares Behälterwandsegment dar, insbesondere wenn diese Behälterwand bzw. dieses Behälterwandsegment in den vom Behälter ausgebildeten Raum hinein schwenkbar oder hinein schiebbar ist, um derart im Behälter aufgenommene Pflanzenteile zu verschieben und/oder zu verdichten. Vorzugsweise ist eine solche verfahrbare Wand bzw. ein solches verfahrbares Behälterwandsegment ebenfalls hydraulisch angetrieben.

In weiterer günstiger Ausgestaltung der fahrbaren Erntemaschine ist vorgesehen, dass die zweite Transporteinrichtung um eine parallel zu ihrer Längsrichtung laufende Achse schwenkbar ist. Dadurch lässt sich insbesondere für den Einsatz im Straßenverkehr die Fahrzeugbreite verringern, wobei bei Schwenkung der zweiten Transporteinrichtung um die Achse die zweite Transporteinrichtung vorzugsweise in das Volumen des Behälters nach Entfernung bzw. nach Abklappen einer Behälterwand bzw. eines Behälterwandsegments einschwenkbar ist. Die Schwenkbewegung der zweiten Transporteinrichtung ist vorzugsweise hydraulisch realisierbar.

Eine Stütze an der zweiten Transporteinrichtung, die auch Förderbandstütze genannt wird, welche im Ernteeinsatz die zweite Transporteinrichtung abstützt, ist im geschwenkten Zustand der zweiten Transporteinrichtung, der eine Verringerung der Breite der Erntemaschine bewirkt, abgesenkt, sodass die endseitige Aufnahme der zweiten Transporteinrichtung im vom Behälter eingeschlossenen Volumen möglich ist.

Die fahrbare Erntemaschine ermöglicht durch ihre Vielzahl von Anpassungsmöglichkeiten an den gegebenen Pflanzenbestand sowie auch an straßenverkehrszulassungsbedingte Regelungen einen optimalen Beschnitt unterschiedlicher Pflanzen oder Pflanzen unterschiedlicher Höhen in Kombination mit einem Selbstfahrbetrieb auf öffentlichen Straßen.

Zur Lösung der Aufgabe wird ein Verfahren zum Ernten von Pflanzenteilen, insbesondere ein Verfahren zum Ernten von Hanf, zur Verfügung gestellt, welches mit der beschriebenen fahrbaren Erntemaschine auszuführen ist. Dabei wird ein Pflanzen aufweisendes Feld mit der Erntemaschine befahren und mittels der Schneideinrichtung werden Teile von Pflanzen abgetrennt. Mittels der ersten Transporteinrichtung werden abgetrennte Pflanzenteile im Wesentlichen quer zur Fahrtrichtung des Fahrzeuges transportiert und mittels der zweiten Transporteinrichtung werden abgetrennte Pflanzenteile im Wesentlichen längs zur Fahrtrichtung des Fahrzeuges transportiert und in den Behälter zwecks Speicherung und/ Transport übergeben.

Die beschnittenen Pflanzen bleiben vorzugsweise nach dem Beschnitt im Erdboden verwurzelt. Die abgetrennten Pflanzenteile, die von den Transporteinrichtungen transportiert werden, sind dabei im Sinne der Erfindung die Pflanzenteile, die mittels der Schneideinrichtung abgetrennt wurden. Der Transport der Pflanzenteile quer zur Fahrrichtung umfasst dabei eine Transportrichtung, die in einem Winkel von 70 °- 110 ° zur normalen Fahrtrichtung des Fahrzeuges erfolgt. Mit einer Transportrichtung längs zur Fahrtrichtung ist ein Transport gemeint, welcher in einer Winkelabweichung von bis zu 20 ° zur normalen Fahrtrichtung des Fahrzeuges erfolgt.

Das erfindungsgemäße Verfahren zum Ernten von Pflanzenteilen ist dabei derart ausgestaltet, das an den selben Pflanzen im wachsenden Bestand mehrmals eine Abtrennung von Pflanzenteilen mittels der Schneideinrichtung vorgenommen wird, wobei die jeweiligen Abtrennvorgänge an den Pflanzen in unterschiedlichen Höhen über dem Erdboden vorgenommen werden. Zwischen den einzelnen Trennvorgängen sollte dabei ein ausreichender zeitlicher Abstand bestehen, der es den Pflanzen ermöglicht, erneut Pflanzenteile auszubilden, deren Ernte sinnvoll ist. So sollte bei einer Hanfernte mehrere Wochen zwischen den einzelnen Ernte- bzw. Abtrennvorgängen liegen, um ein Nachwachsen von emtewerten Blüten zu ermöglichen. Aufgrund dessen, dass die erntewerten Pflanzenteile insbesondere bei mehrmaliger Ernte im Jahr durchschnittlich in unterschiedlichen Höhen an der Pflanze vorhanden sind, müssen diese Pflanzenteile in unterschiedlichen Höhen von der Pflanze abgetrennt werden. Zu diesem Zweck ist die Höhe der Schneideirichtung bzw. die Höhe des Fahrgestells zur Einstellung der lichten Höhe zwischen der Erdbodenoberfläche und der Unterseite der Erntemaschine bzw. des Fahrzeuges zu variieren, um einerseits einen optimalen Beschnitt an den Pflanzen durchführen zu können und andererseits über die Pflanzen hinweg fahren zu können, ohne diese Pflanzen zu beeinträchtigen.

Im Erntebetrieb ist vorzugweise der Behälter der Erntemaschine so zu verdrehen, dass der länglich gestaltete Behälter mit einem Bereich unter die zweite Transporteinrichtung gelangt und demzufolge die abgetrennten und von der zweiten Transporteinrichtung transportierten Pflanzenteile schwerkraftbedingt von der zweiten Transporteinrichtung in den Behälter gelangen können. Dort folgt eine Verschiebung bzw. Verdichtung der Pflanzenteile mittels des Rollenbodens des Behälters und/oder mittels einer weiteren Einrichtung zur Verdichtung und/oder Transport von in dem Behälter aufgenommener Pflanzenteile, sodass der unter der zweiten Transporteinrichtung befindliche Bereich des Behälters erneut Pflanzenteile aufnehmen kann. Zum Fahrbetrieb auf öffentlichen Straßen ist der längliche Behälter dann wieder in die Position zu drehen, in der er quer zur Fahrtrichtung die geringste Ausdehnung aufweist und somit das Fahrzeug eine für den Straßenverkehr taugliche Breite erhält.

Sämtliche hydraulisch angetriebenen Einrichtungen werden vorzugweise von einer zentralen hydraulischen Druckeinrichtung gespeist.

Die Erfindung wird in Folgenden anhand der in den beiliegenden Zeichnungen dargestellten Ausführungsführungsbeispiele erläutert.

Es zeigt
Figur 1: Eine Erntemaschine in Ansicht von der Seite mit einer Schneideinrichtung in einer ersten Höhenposition,
Figur 2: Die Erntemaschine in Ansicht von der Seite mit der Schneideinrichtung in einer zweiten Höhenposition,
Figur 3: Die Erntemaschine in Ansicht von der Seite mit der Schneideinrichtung in einer dritten Höhenposition,
Figur 4: Die Schneideinrichtung in einer perspektivischen Ansicht,
Figur 5: Die Erntemaschine in einer perspektivischen Ansicht,
Figur 6: Die Erntemaschine in Draufsicht,
Figur 7: Die Erntemaschine in einer weiteren perspektivischen Ansicht,
Figur 8: Die Erntemaschine in einer weiteren Draufsicht,
Figur 9: Einen Behälter in perspektivischer Ansicht,
Figur 10: Die Erntemaschine in perspektivischer Ansicht in einem für den Fahrbetrieb auf öffentlichen Straßen zugelassenen Zustand,
Figur 11: Die Erntemaschine in Draufsicht im zum für den Fahrbetrieb auf öffentlichen Straßen zugelassenen Zustand,
Figur 12: Die Straßenmaschine in Ansicht von der Seite im zum für den Straßenverkehr zugelassenen Zustand.

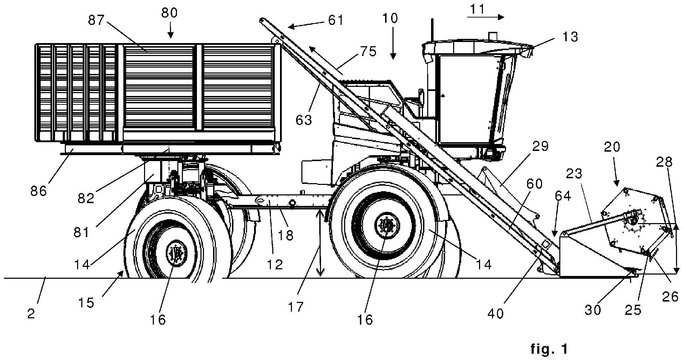

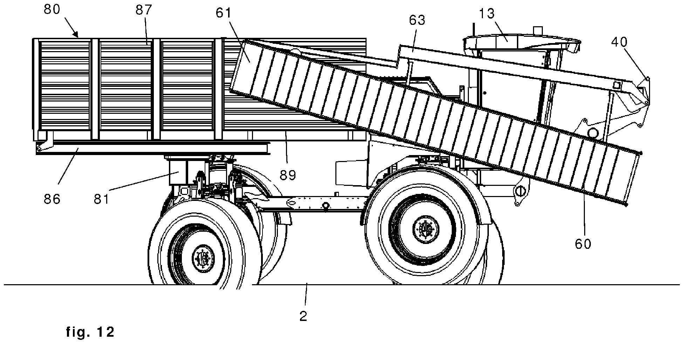

Wie aus Figur 1 ersichtlich ist, umfasst die Erntemaschine, die in den Figuren 1- 3, 5 - 8 und 10 - 12 dargestellt ist, ein Fahrzeug 10, welches ein Fahrwerk 12 und darauf angeordnet eine Kabine 13 aufweist. Des Weiteren ist auf dem Fahrwerk 12 ein Behälter 80 angeordnet. Das hier dargestellte Fahrzeug 10 weist zwei Achsen auf, auf denen jeweils zwei Räder 14 montiert sind. Mittels einer Parallelogramm-Höhenverstellungseinrichtung 29 ist mit dem Fahrwerk 12 die Schneideinrichtung 20 verbunden, wobei die Ausführung der Erntemaschine hier nicht auf die Verwendung einer Parallelogramm-Höhenverstellungseinrichtung 29 eingeschränkt ist, sondern auch andere, ähnlich funktionierbare Höhenverstellungseinrichtungen verwendet werden können. Die mechanische Verbindung zwischen der Parallelogramm-Höhenverstellungseinrichtung 29 und der Schneideinrichtung 20 wird über eine Kupplungseinrichtung 40 realisiert, die es ermöglicht, die Schneideinrichtung 20 an die Höhenverstellungseinrichtung 29 zu montieren und dort auch zu demontieren.

Durch Drehbewegung der Schneideinrichtung 20 werden die dort angeordneten Zinken 26 bzw. Paddel ebenfalls in Rotation versetzt, wodurch diese die zu beschneidenden Pflanzen in optimaler Weise so bewegen, dass abzutrennende Pflanzenteile in den Bereich des hier dargestellten Doppelmesser-Mähbalkens 30 gelangen. Auch hier ist die Ausführung der Erntemaschine wieder nicht auf den dargestellten Doppelmesser-Mähbalken 30 eingeschränkt, sondern es kann stattdessen auch eine alternative Trenneinrichtung vorgesehen sein. Die dadurch abgetrennten Pflanzenteile gelangen auf eine in Figur 1 nicht ersichtliche erste Transporteinrichtung, welche die Pflanzenteile zu der dargestellten zweiten Transporteinrichtung 60 transportieren und diese an die zweite Transporteinrichtung 60 übergeben. Mit der zweiten Transporteinrichtung 60 werden die abgetrennten Pflanzenteile in Förderrichtung 75 zum Endabschnitt 61 der zweiten Transporteinrichtung 60 transportiert, von wo sie schwerkraftbedingt in den Behälter 80 fallen. Die zweite Transporteinrichtung 60 wird dabei mittels einer Förderbandstütze 63 in Form und Lage gehalten.

Während der beschriebenen Abtrennvorgänge fährt die Erntemaschine über das mit den zu beschneidenden Pflanzen bestellte Feld. Um dabei nicht mit der Unterseite 18 des Fahrzeugs 10 Pflanzen niederzudrücken oder umzuknicken, ist das Fahrwerk 12 des Fahrzeuges 10 höhenverstellbar, sodass die Fahrzeughöhe 17 zwischen den Erdboden 2 und der Unterseite 18 flexibel einstellbar ist.

Die dadurch erreichbaren unterschiedlichen Höhenpositionen sind durch die in unterschiedlichen Höhen dargestellten Räder 14 angedeutet. Somit lässt sich auf die Höhe des Pflanzenwuchses nicht nur durch die Einstellung der Höhe 28 der Schneideinrichtung 20 reagieren, sondern auch durch die Einstellung der Fahrzeughöhe 17.

Zwischen dem Fahrwerk 12 des Fahrzeuges 10 und dem Behälter 80 ist ein Drehgelenk 81 angeordnet, dessen Drehachse 82 im Wesentlichen senkrecht zum Erdboden 12 verläuft. Dadurch ist der Behälter 80 in der Ebene seines Bodens in der in der Figur 1 dargestellten Lage drehbar, um somit die Position des Behälters 80 der Position des Endabschnittes 61 der zweiten Transporteinrichtung 60 zwecks Übergabe der Pflanzenteile in den Behälter 80 anpassen zu können.

Die dargestellte Erntemaschine verfügt über eine Verbrennungskraftmaschine zum Antrieb des Fahrzeuges 10 und/oder einen elektrischen Antrieb. Des Weiteren verfügt sie vorzugsweise jedem Rad zugeordnet über jeweils einen hydrostatischen Antrieb 16.

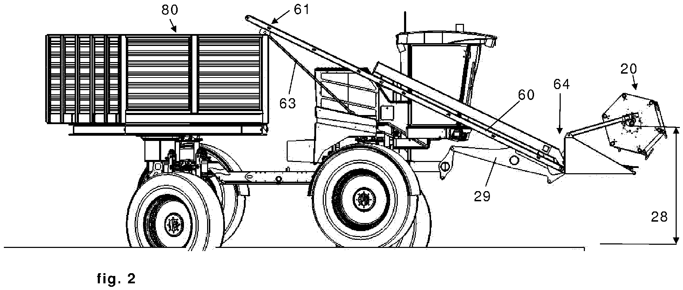

Wie aus Figur 2 ersichtlich ist kann mittels der Parallelogramm-Höhenverstellungseinrichtung 29 die Schneideinrichtung 20 angehoben werden, sodass die Höhe 28 der Schneideinrichtung 20 in Bezug zum Erdboden 2 größer ist als in Figur 1 dargestellt. Dabei wird auch der mit der Schneideinrichtung 20 verbundene Bereich der zweiten Transporteinrichtung 64 mit angehoben, sodass auch in dieser Position mittels der Schneideinrichtung 20 abgetrennte Pflanzenteile über die zweite Transporteinrichtung 60 in den Behälter 80 transportiert werden können.

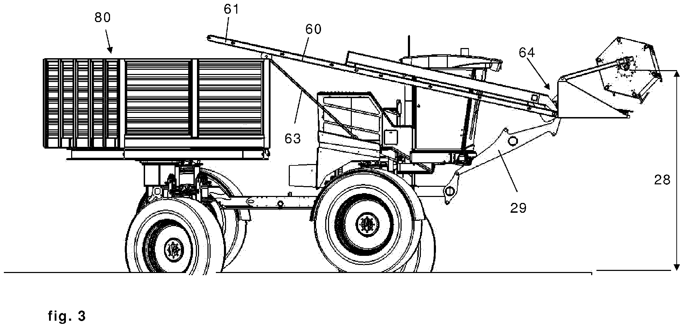

In Figur 3 ist die Schneideinrichtung 20 in der größten erreichbaren Höhe 28 dargestellt, wobei auch hier ersichtlich ist, das auch in dieser Position die zweite Transporteinrichtung mit ihrem mit der Schneideinrichtung verbundenen Bereich 64 angehoben wurde und der Endabschnitt 61 der zweiten Transporteinrichtung 60 weiter derart positioniert ist, dass mit der zweiten Transporteinrichtung 60 transportierte Pflanzenteile in den Behälter 80 gelangen können.

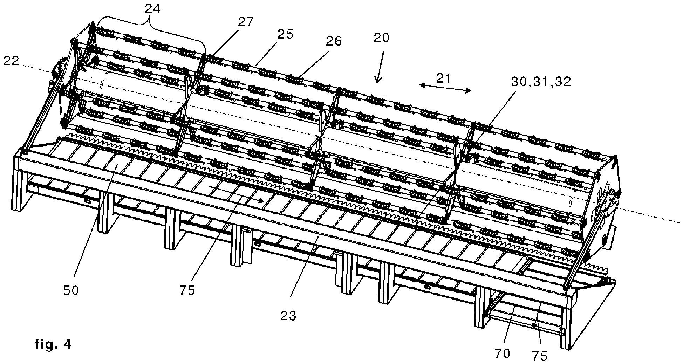

Figur 4 zeigt die Schneideinrichtung 20 in perspektivischer Ansicht, wobei ersichtlich ist, dass die Schneideinrichtung 20 ein Gestell 23 aufweist, an der auf einer Rotationsachse 22 gelagerte Segmente 24 der Schneideinrichtung 20 angeordnet sind. Diese Segmente 24 der Schneideinrichtung 20 erstrecken sich in Längsrichtung 21. Die Segmente 24 sind durch sternförmig ausgestaltete Verbindungselemente 27 vorzugsweise mittels Schraubverbindungen verbunden. Jedes der Segmente 27 verfügt über an den Verbindungselementen 27 befestigte Zinkenhalter 25, an denen Zinken 26 bzw. sogenannte Paddel angeordnet sind. Bei Rotation der Segmente 24 um die Rotationsachse 22 rotieren demzufolge auch die Zinkenhalter 25 und die daran angeordneten Zinken 26 um die Rotationsachse 22. Die Schneideinrichtung 20 verfügt des Weiteren über eine in Figur 4 nicht dargestellte Kurvensteuerung, mit der bei Rotation der Schneideinrichtung 20 um die Rotationsachse 22 die Zinkenhalter 25 selbst in eine eigene, um ihre Längsachse erfolgenden Rotation zersetzt werden, sodass die daran angeordneten Zinken 26 ebenfalls um die Längsachse der Zinkenhalter 25 rotieren. Es kann eine komplexe, mehrere Rotations- und/oder Translationsabschnitte aufweisende Bewegung der Enden der Zinken 26 durchgeführt werden, damit diese in optimaler Weise die Pflanzen dem Doppelmesser-Mähbalken 30 zuführen bzw. vom Doppelmesser-Mähbalken 30 wegführen können. Der dargestellte Doppelmesser-Mähbalken 30 umfasst eine erste Klinge 31 sowie eine zweite Klinge 32, die mit Zähnen versehen gegeneinander translatorisch bewegbar sind, sodass zwischen den Zähnen der Klingen 31 und 32 geratene Pflanzen durchtrennt werden. Abgetrennte Pflanzenteile gelangen somit auf die erste Transporteinrichtung 50, welche im Wesentlichen als ein Förderband ausgestaltet ist. Diese erste Transporteinrichtung 50 transportiert in Förderrichtung 75 die Pflanzenteile im Wesentlichen parallel zur Rotationsachse 22 der Schneideinrichtung 20 und demzufolge in Längsrichtung 21 der Schneideinrichtung 20. Dort gelangen die Pflanzenteile auf eine dritte Transporteinrichtung 70, mit welcher die Bewegungsrichtung der Pflanzenteile im Wesentlichen im rechten Winkel umgelenkt wird und die Pflanzenteile somit senkrecht zur Längsrichtung 21 der Schneideinrichtung 20 bewegt werden. Auch diese dritte Transporteinrichtung 40 ist im Wesentlichen als ein Fließband ausgestaltet.

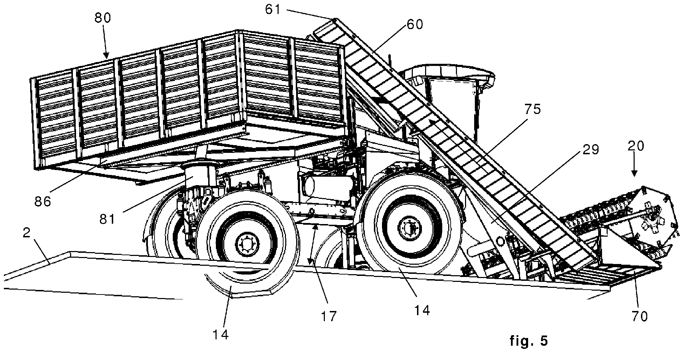

Figur 5 zeigt den technischen Zusammenhang zwischen der dritten Transporteinrichtung 70 und der zweiten Transporteinrichtung 60, der darin besteht, das die Pflanzenteile von der dritten Transporteinrichtung 70 an die zweite Transporteinrichtung 60 übergeben werden und von dieser über den Endabschnitt 61 dem Behälter 81 zugeführt werden.

Des Weiteren ist aus Figur 5 ersichtlich, dass der Behälter 80 mittels dem Drehgelenk 81 in eine Quer-Position gedreht wurde, sodass ein Teil des Behälters 80 vom Endabschnitt 61 der zweiten Transporteinrichtung 60 überragt wird, sodass davon transportierte Pflanzenteile schwerkraftsbedingt in den Behälter 80 fallen können.

Zwischen dem Drehgelenk 81 und dem Behälter 80 ist ein Abstützelement 86 in Form eines Zwischenrahmes angeordnet, der in Zusammenwirkung mit einer hier nicht dargestellten Kippeinrichtung ermöglicht, das der Behälter 80 in eineWinkelposition geschwenkt werden kann, in der der Boden des Behälters 80 in einem Winkel von ca. 10° - 45 ° zum Erdboden 2 angeordnet ist.

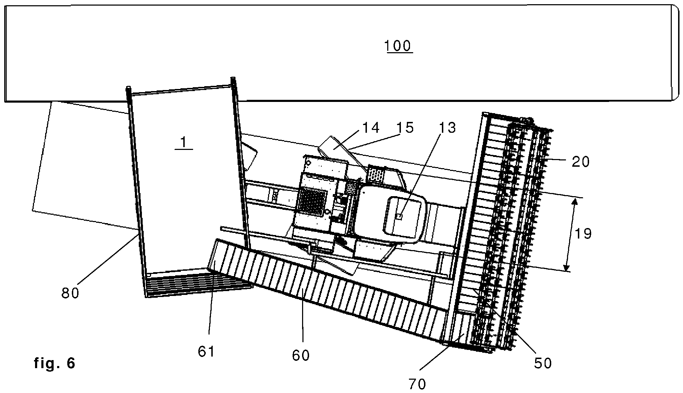

In Figur 6 ist diese Position im Wesentlichen in einer Draufsicht dargestellt, wobei auch der Lenkeinschlag 15 der Räder 14 der Vorderachse erkennbar ist sowie deren Spurbreite 19. Die dargestellte Erntemaschine ist vorzugsweise derart ausgestaltet, dass die Spurbreite 19 an beiden Fahrzeugachsen in einem bestimmten Bereich variabel einstellbar ist, um dadurch eine Anpassung der Spurbreite an Fahrgassen auf dem Feld vornehmen zu könnenund Pflanzen so wenig wie möglich zu beeinträchtigen.

Aus der Querstellung des Behälters 80 wird ersichtlich, das der Behälter 80 dabei derart verschwenkbar ist, das der dem Endabschnitt 61 der zweiten Transporteinrichtung 60 gegenüberliegende Bereich einen neben der Erntemaschine gelagerten zu beladenden Bereich 100 überragt, sodass im Behälter 80 aufgenommene Pflanzenteile 1 in einfacher Weise auf diesen zu beladenden Bereich 100, der z. B. ein daneben stehender Lastkraftwagen sei kann, übergeben werden können.

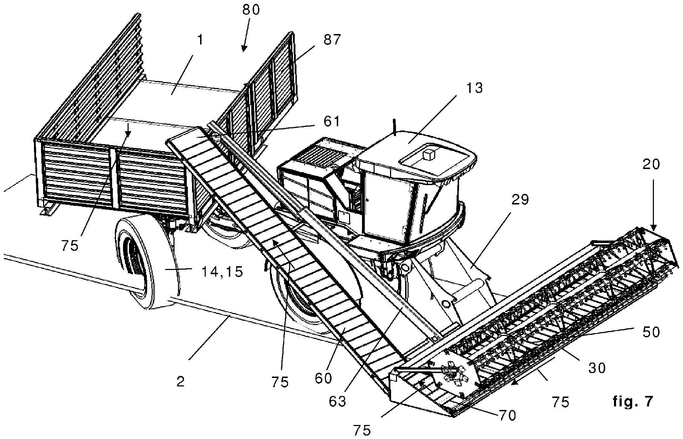

In Figur 7 ist diese Position des Behälters 80 noch einmal in perspektivischer Ansicht dargestellt, aus der außerdem ersichtlich ist, das auch die Räder der Hinterachse einen Lenkeinschlag 15 aufweisen können, wodurch die sogenannte Hundeganglenkung oder Krabbenlenkung realisierbar ist.

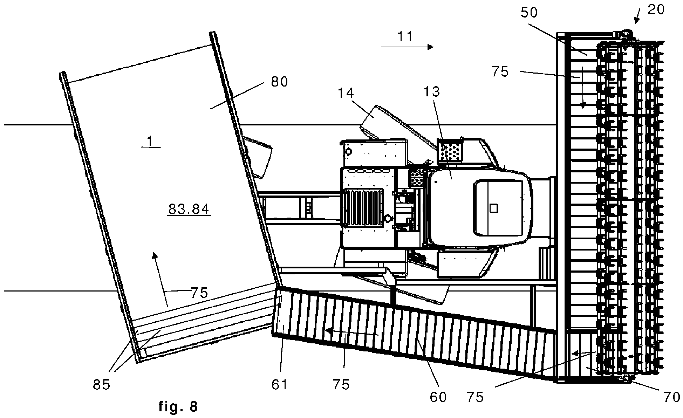

Aus der in Figur 8 ersichtlichen Draufsicht ist erkennbar, dass der Boden 83 des Behälters 80 als sogenannter Rollenboden 84 ausgestaltet ist, der eine Mehrzahl von im Wesentlichen parallel zueinander angeordneten Rollen 85 aufweist. Es sind wenigstens einige dieser Rollen 85 antreibbar, sodass im Behälter 80 auf dem Rollenboden 84 aufgenommene Pflanzenteile 1 durch die Rollbewegung der Rollen 85 transportiert und/oder verdichtet werden können. Dies führt u. a. dazu, dass der unter dem Endabschnitt 61 der zweiten Transporteinrichtung 60 angeordnete Bereich des Behälters 80 weiterhin Volumen zur Aufnahme weiterer Pflanzenteile bereit hält.

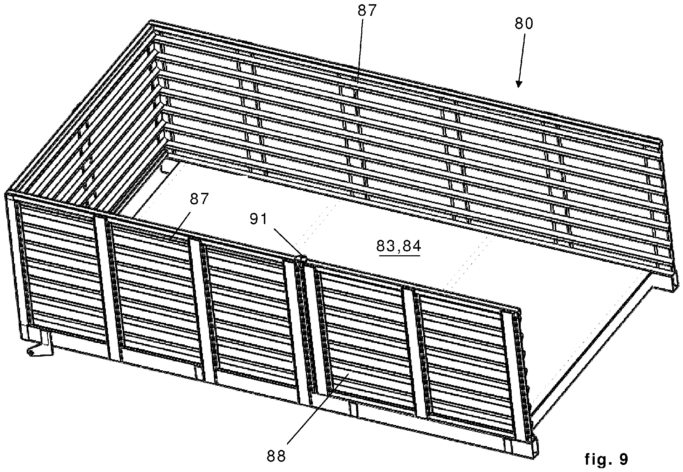

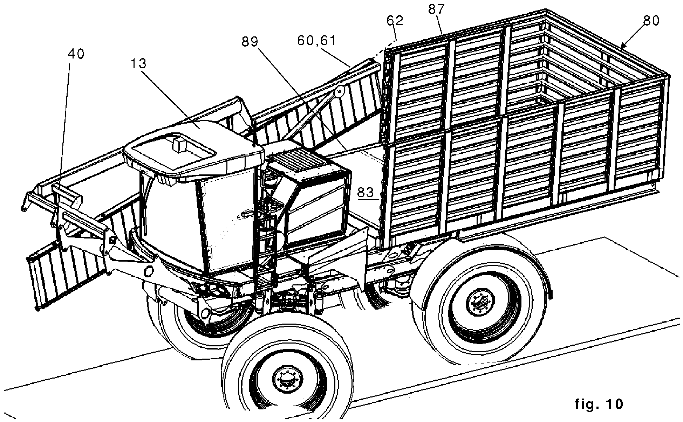

Der Behälter 80 selbst ist im Wesentlichen als ein einseitig offener Quader ausgeführt, bei dem am Behälterboden 83 angeschlossen mehrere Behälterwände 87 oder Behälterwände 88 angeordnet sind. In der in der Figur 9 dargestellten Ausführungsvariante umfasst der Behälter 80 drei Behälterwände 87 sowie ein Behälterwandsegment 88, welches mittels eines Scharniers 91 an der benachbarten Behälterwand 87 angeschlossen ist. Dadurch ist es möglich, dieses Behälterwandsegment 88 um die Achse des Scharniers 91 in den Innenraum des Behälters 80 zu schwenken und an die Innenseite der benachbarten Behälterwand 87 anzulegen, sodass ein Randabschnitt 89 des Behälterbodens 83 freigegeben ist, so wie es aus Figur 10 ersichtlich ist.

In Figur 10 ist die Erntemaschine in einem Zustand dargestellt, in dem sie unter Verringerung ihrer Gesamt-Breite für den Fahrbetrieb auf öffentlichen Straßen eingerichtet ist. Zu diesem Zweck ist von der Kupplungseinrichtung 40 die Schneideinrichtung 20 entfernt worden. Diese Schneideinrichtung 20 kann zu Transportzwecken im Behälter 80 aufgenommen werden.Zwecks Verringerung der Breite kann die zweite Transporteinrichtung 60 um eine Drehachse 62, die im Wesentlichen entlang einer im Betriebszustand der zweiten Transporteinrichtung 60 an deren innenseitigen Kante verläuft, herumgeschwenkt worden, sodass die Fläche der zweiten Transporteinrichtung 60 im Wesentlichen senkrecht angeordnet ist. Um eine Kollision mit dem Behälter 80 zu vermeiden ragt der Endabschnitt 61 der zweiten Transporteinrichtung 60 in dem durch Herumklappen des Behälterwandsegments 88 freigegebenen Bereich 80 hinein. Diese Anpassung des Behälters bzw. seiner Behälterwände an den zur Straßentransport ausgestalteten Zustand bzw. Lage der zweiten Transporteinrichtung 60 ermöglicht die Verringerung der Gesamtbreite der Erntemaschine derart, dass diese auf öffentlichen Straßen gefahren werden darf.

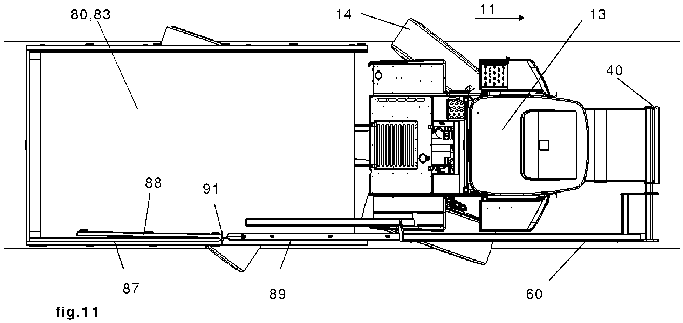

Dieser Zustand ist noch einmal in Figur 11 in Ansicht von der Seite dargestellt, aus der ersichtlich ist, dass die gesamte Breite der Erntemaschine nicht größer ist als die Breite des länglich gestalteten Behälters 80.

**Bezugszeichenliste**

| | |
|---|---|
| Pflanzenteile | 1 |
| Erdboden | 2 |
| | |
| Fahrzeug | 10 |
| | |
| Fahrtrichtung | 11 |
| Fahrwerk | 12 |
| Kabine | 13 |
| Rad | 14 |
| Lenkeinschlag | 15 |
| Antrieb | 16 |
| Fahrzeughöhe | 17 |
| Unterseite des Fahrzeugs | 18 |
| Spurbreite | 19 |
| | |
| Schneideinrichtung | 20 |
| Längsrichtung | 21 |
| Rotationsachse | 22 |
| Gestell | 23 |
| Segment | 24 |
| Zinkenhalter | 25 |
| Zinken | 26 |
| Verbindungselement | 27 |
| Höhe | 28 |
| Parallelogramm-Höhenverstellungseinrichtung | 29 |
| Doppelmesser-Mähbalken | 30 |
| Erste Klinge | 31 |
| Zweite Klinge | 32 |
| Kupplungseinrichtung | 40 |
| | |
| erste Transporteinrichtung | 50 |
| zweite Transporteinrichtung | 60 |
| Endabschnitt der zweiten Transporteinrichtung | 61 |
| Drehachse der zweiten Transporteinrichtung | 62 |
| Förderbandstütze | 63 |
| der mit der Schneideinrichtung verbundene Bereich | |
| der zweiten Transporteinrichtung | 64 |
| dritte Transporteinrichtung | 70 |
| Förderrichtung | 75 |
| | |
| Behälter | 80 |
| Drehgelenk | 81 |
| Drehachse des Drehgelenks | 82 |
| Behälterboden | 83 |
| Rollenboden | 84 |
| Rolle | 85 |
| Abstützelement | 86 |
| Behälterwand | 87 |
| Behälterwandsegment | 88 |
| Freigegebener Randabschnitt | 89 |
| Einrichtung zur Verdichtung und/ oder Transport | 90 |
| Scharnier | 91 |
| | |
| Zu beladender Bereich | 100 |

## Patentansprüche

1. Verfahren zum Ernten von Pflanzenteilen, insbesondere zum Ernten von Hanf, mittels einer fahrbaren Erntemaschine zum Ernten von Pflanzenteilen, insbesondere zum Ernten von Hanf, umfassend ein Fahrzeug (10) sowie eine daran angeordnete Schneideinrichtung (20) zum Abtrennen von Teilen (1) von in der Erde verbleibenden Pflanzen, eine erste Transporteinrichtung (50) zum Transport abgetrennter Pflanzenteile (1) im Wesentlichen quer zur Fahrtrichtung (11) des Fahrzeugs (10) und eine zweite Transporteinrichtung (60) zum Transport abgetrennter Pflanzenteile (1) im Wesentlichen längs der Fahrtrichtung (11) des Fahrzeugs (10), sowie einen Behälter (80) zur Aufnahme der abgetrennten Pflanzenteile (1), dem die Pflanzenteile (1) mittels der zweiten Transporteinrichtung (60) zuführbar sind, wobei bei dem Verfahren ein Pflanzen aufweisendes Feld mit der Erntemaschine befahren wird, mittels der Schneideinrichtung (20) Teile von Pflanzen (1) abgetrennt werden, mittels der ersten Transporteinrichtung (50) abgetrennte Pflanzenteile im Wesentlichen quer zur Fahrtrichtung (11) des Fahrzeugs (10) transportiert werden, mittels der zweiten Transporteinrichtung (60) abgetrennte Pflanzenteile (1) im Wesentlichen längs der Fahrtrichtung (11) des Fahrzeugs (10) transportiert werden und in den Behälter (80) zwecks Speicherung und/ oder Transport übergeben werden, **dadurch gekennzeichnet, dass** an denselben Pflanzen im wachsenden Bestand mehrmals eine Abtrennung von Pflanzenteilen mittels der Schneideinrichtung (20) vorgenommen wird, wobei die jeweiligen Abtrennvorgänge an den Pflanzen in unterschiedlichen Höhen (28) über dem Erdboden (2) vorgenommen werden.

## Claims

1. A method for harvesting plant parts, in particular for harvesting hemp, by means of a mobile agricultural harvester for harvesting plant parts, in particular for harvesting hemp, comprising a vehicle (10) as well as a cutting apparatus (20) attached thereto for severing parts (1) from plants still in the soil, a first transport apparatus (50) for transporting severed plant parts (1) substantially transversely to the driving direction (11) of the vehicle (10) and a second transport apparatus (60) for transporting severed plant parts (1) substantially longitudinally to the driving direction (11) of the vehicle (10), as well as a container (80) for receiving the severed plant parts (1) into which the plant parts (1) are insertable by means of the second transport apparatus (60),
wherein, in the method,
a field having plants is driven across with the agricultural harvester, parts of plants (1) are severed by means of the cutting apparatus (20), severed plant parts are transported substantially transversely to the driving direction (11) of the vehicle (10) by means of the first transport apparatus (50), severed plant parts (1) are transported substantially longitudinally to the driving direction (11) of the vehicle (10) by means of the second transport apparatus (60) and are transferred into the container (80) for storage and/or transport purposes, **characterized in that**
severing plant parts by means of the cutting apparatus (20) is conducted several times on the same plants in the growing plant stock,
wherein the respective severing processes on the plants are conducted at different heights (28) above the ground (2).

## Revendications

1. Procédé de récolte de parties de plantes, en particulier de récolte de chanvre, à l'aide d'une machine de récolte mobile pour la récolte de parties de plantes, en particulier pour la récolte de chanvre, comprenant un véhicule (10) ainsi qu'un moyen de coupe (20) disposé sur celui-ci pour couper des parties (1) de plantes restant dans le sol, un premier moyen de transport (50) pour le transport de parties de plantes coupées (1) sensiblement transversalement à la direction de déplacement (11) du véhicule (10) et un second moyen de transport (60) pour le transport de parties de plantes coupées (1) sensiblement le long de la direction de déplacement (11) du véhicule (10), ainsi qu'un réceptacle (80) pour recevoir les parties de plantes coupées (1), vers lequel peuvent être acheminées les parties de plantes (1) à l'aide du second moyen de transport (60),
dans lequel, le procédé prévoit que la machine de récolte se déplace sur un champ présentant des plantes, des parties de plantes (1) sont coupées à l'aide du moyen de coupe (20), les parties de plantes coupées à l'aide du premier moyen de transport (50) sont transportées sensiblement transversalement à la direction de déplacement (11) du véhicule (10), les parties de plantes (1) coupées à l'aide du second moyen de transport (60) sont transportées sensiblement le long de la direction de déplacement (11) du véhicule (10) et sont transférées dans le réceptacle (80) dans un but de stockage et/ ou de transport, **caractérisé en ce qu'**une coupe de parties de plantes est réalisée plusieurs fois sur les mêmes plantes en cours de croissance à l'aide du moyen de coupe (20), les processus de coupe respectifs au niveau des plantes étant réalisés à différentes hauteurs (28) au-dessus du sol (2).
